**Europäisches Patentamt**

(19) **European Patent Office**

**Office européen des brevets**

(11) Veröffentlichungsnummer: **0 147 688**

**B1**

(12) **EUROPÄISCHE PATENTSCHRIFT**

(45) Veröffentlichungstag der Patentschrift: 04.10.89

(51) Int. Cl.⁴: **F 42 D 1/06**

(21) Anmeldenummer: **84114810.9**

(22) Anmeldetag: **05.12.84**

(54) **Verfahren zum zeitlich gestaffelten Auslösen elektronischer Sprengzeitzünder.**

(30) Priorität: **22.12.83 DE 3346343**
**15.11.84 DE 3441736**

(43) Veröffentlichungstag der Anmeldung:
**10.07.85 Patentblatt 85/28**

(45) Bekanntmachung des Hinweises auf die Patenterteilung:
**04.10.89 Patentblatt 89/40**

(84) Benannte Vertragsstaaten:
**AT BE CH DE FR GB IT LI SE**

(56) Entgegenhaltungen:
**DE-A-2 945 122**
**US-A-4 314 507**

(73) Patentinhaber: **Dynamit Nobel Aktiengesellschaft,**
**Postfach 12 61, D-5210 Troisdorf (DE)**

(72) Erfinder: **Florin, Johann, Dr., Robert- Koch-**
**Strasse 3, D-5210 Troisdorf (DE)**
Erfinder: **Heinemeyer, Friedrich, Dr., Farnweg 29,**
**D-5200 Siegburg (DE)**
Erfinder: **Röh, Peter, Augustinusstrasse 2, D-5210**
**Troisdorf (DE)**
Erfinder: **Störrle, Hansmartin, Op den Kamp 8,**
**D-2000 Norderstedt (DE)**

EP 0 147 688 B1

## Beschreibung

Die Erfindung betrifft ein Verfahren zum zeitlich gestaffelten Auslösen elektronischer Sprengzeitzünder mit individuellen Verzögerungszeiten gegenüber einem Befehlssignal von einer Zündmaschine, die mit den Sprengzeitzündern in einer Reihen- und/oder Parallelschaltung zu wenigstens einem Zündkreis verbunden ist, bei welchem in einer durch eine Impulsfolge für die Zündung von der Zündmaschine bestimmten Aufladephase zur Einstellung der individuellen Verzögerungszeit in jedem dieser Zünder ein erster Signalfluß von einer Quelle einem Integrator zugeführt und während einer anschließenden Verzögerungsphase, in allen Zündern mit dem Befehlssignal gleichzeitig beginnend, ein zu dem ersten Signalfluß in vorgegebener Beziehung stehender zweiter Signalfluß so lange dem Integrator zugeführt wird, bis das Integral des zweiten Signalflusses betragsmäßig gleich dem in dem Integrator gespeicherten Integral des ersten Signalflusses geworden ist, woraufhin die Zündung ausgelöst wird.

Bei einem bekannten Verfahren dieser Art (DE-A-2 945 122) liefert eine Zündmaschine an zahlreiche angeschlossene Sprengzeitzünder eine Impulsfolge, deren Impulse von einem in jedem Zünder enthaltenen Zähler gezählt werden. Bei einem zünderspezifischen ersten Zählwert des Zählers werden die Impulse einer im Zünder enthaltenen Impulsquelle an einen als Vorwärts /Rückwärts-Zähler ausgebildeten Integrator geliefert, der dadurch aufgeladen wird. Die Aufladung endet für jeden der Zünder, wenn sein erster Zähler einen zweiten Zählwert erreicht hat. Der erste Zähler zählt hiernach weiter und nach Erreichen eines dritten Zählwertes, der für alle Zünder gleich ist, wird der Integrator umgeschaltet, so daß die nachfolgenden Impulse der Impulsquelle rückwärts gezählt werden und der Inhalt des Integrators abnimmt. Wenn der Inhalt des Integrators auf einen vorbestimmten Wert, der Null sein kann, abgefallen ist, wird die Zündung ausgelöst. Die individuellen Zeitverzögerungen der einzelnen Zünder werden bei dem bekannten System dadurch erhalten, daß der Integrationsvorgang zu unterschiedlichen Zeiten beginnt, d.h. daß die ersten Zählwerte der ersten Zähler der einzelnen Integratoren unterschiedlich eingestellt sind. Die Aufladephasen der Integratoren aller Zünder unterscheiden sich somit in ihren Anfangszeitpunkten. Die gleichen Verzögerungen, die hinsichtlich der Anfangszeitpunkte der Aufladephasen auftreten, ergeben sich später auch bei der Beendigung der Entladephase. Hierbei kann entweder derjenige Zünder, dessen Integratoraufladung zuletzt begonnen hat als erster zünden, weil der Integrator nur bis zu einem geringen Wert aufgeladen worden ist oder, wenn alle Integratoren bis zu dem gleichen Wert aufgeladen werden, zündet derjenige Zünder als letzter, dessen Aufladung zuletzt begonnen hat. Das bekannte Zündsystem ist schaltungstechnisch aufwendig, weil in jedem Zünder außer dem Zähler mindestens zwei Komparatoren erforderlich sind, durch die der erste und der zweite Zählwert dieses Zählers ermittelt werden.

Der Erfindung liegt die Aufgabe zugrunde, ein Verfahren der genannten Art anzugeben, bei der der schaltungstechnische Aufwand im Zünder verringert ist.

Die Lösung dieser Aufgabe besteht erfindungsgemäß darin, daß das Zuführen der ersten Signalflüsse zu den Integratoren aller Zünder gleichzeitig beginnt und für jeden Zünder die individuelle Verzögerungszeit nur durch das von der Impulsfolge für die Zündung abhängige Ende des Zuführens der ersten Signalflüsse und durch das Verhältnis beider Signalflüsse zueinander bestimmt wird.

Bei dem erfindungsgemäßen Verfahren werden die Integratoren sämtlicher an die Zündmaschine angeschlossener Zünder beim Auftreten der Impulsfolge für die Zündung gemeinsam gestartet, so daß hinsichtlich des Beginns der Aufladephase keine individuellen Einstellungen in den Zündern erforderlich sind. Das Ende der Aufladephase kann zünderspezifisch festgelegt werden, jedoch besteht auch die Möglichkeit, für alle Zünder die Länge der Aufladephase gleichzumachen. In jedem Fall verringert sich der Aufwand an erforderlichen Komparatoren in der Schaltung des Zünders. Die Verringerung des Schaltungsaufwandes im Zünder ist wichtig, weil die Zünderschaltung nur einmal benutzt und beim Detonieren der pyrotechnischen Ladung zerstört wird. Die Zünderschaltung sollte daher so einfach und kostengünstig wie möglich aufgebaut sein.

Bei Anwendung des erfindungsgemäßen Verfahrens kann in den elektronischen Sprengzeitzündern nach deren Einsetzen in die Sprenglöcher und Verdrahtung untereinander durch insbesondere elektromagnetische Felder eine Spannung an den Eingängen mindestens einiger Sprengzünder erzeugt werden, die die elektronischen Elemente bereits in Betrieb setzt und undefinierte Zustände darin erzeugt, so daß die anschließende Einstellung der individuellen Verzögerungszeit nicht richtig erfolgt. Ferner ist es auch möglich, daß beim Einstellen der individuellen Verzögerungszeit durch überlagerte Störungssignale falsche Zustände auftreten. Um daher eine erhöhte Sicherheit bei der Einstellung der individuellen Verzögerungszeiten durch das Signal der Zündmaschine zu erreichen, ist es nach einer Ausgestaltung des erfindungsgemäßen Verfahrens zweckmäßig, daß vor der Impulsfolge für die Zündung eine erste Folge von Freigabeimpulsen übertragen wird, während deren Dauer ein Signalfluß integriert wird, anschließend eine zweite, von der ersten Folge abweichende, jedoch die gleiche Dauer aufweisende Folge von Freigabeimpulsen übertragen und während dieser Dauer ebenfalls dieser Signalfluß integriert wird, und daß dann und nur dann die von der Zündmaschine empfangenen Signale als Impulsfolge für die Zündung gewertet werden, wenn die Abweichung des am Ende der ersten Folge gebildeten Integrals von dem am Ende der zweiten Folge gebildeten Integrals unter einem vorgegebenen Grenzwert liegt. Auf diese Weise wird sichergestellt, daß die Einstellung der individuellen Verzögerungszeiten und auch das Auslösen der Sprengzeitzünder nur dann erfolgt, wenn die von der Zündmaschine erzeugten Signale von den Sprengzeitzündern einwandfrei verarbeitet werden. Der Aufwand in den einzelnen elektronischen Sprengzeitzündern erhöht sich dadurch etwas, jedoch wird dies durch die zusätzlich gewonnene Sicherheit beim Betrieb mehr als aufgewogen.

Zweckmäßig ist es, daß die erste Folge der Freigabeimpulse eine vorgegebene erste konstante Frequenz und die zweite Folge eine vorgegebene zweite konstante Frequenz hat. Auf diese Weise lassen sich die Impulse in beiden Folgen leicht steuern.

Um zu verhindern, daß ein Sprengzeitzünder, der die Freigabeimpulse und anschließenden Startimpulse nicht richtig verarbeitet hat, nicht eingestellt und damit anschließend auch nicht ausgelöst wird, ist es zweckmäßig, daß die Aufeinanderfolge der ersten und zweiten Folge von Freigabeimpulsen mindestens einmal wiederholt wird, und die Wertung der von der Zündmaschine empfangenen Signale als Impulsfolge für die Zündung nur dann erfolgt, wenn am Ende mindestens einer zweiten Folge von Freigabeimpulsen die Abweichung der beiden Integrale unter der vorgegebenen Grenze liegt, und daß bei einer größeren Abweichung die Integrale auf einen Anfangswert zurückgesetzt werden. Auf diese Weise wird erreicht, daß mindestens nach der ersten Aufeinanderfolge der ersten und zweiten Folge von Freigabeimpulsen definierte Zustände im Sprengzeitzünder vorliegen und die nächste Folge von Impulsen einwandfrei verarbeitet wird.

Bei der Verwendung der vorstehend angegebenen Ausgestaltungen des erfindungsgemäßen Verfahrens zur Erhöhung der Sicherheit muß im Sprengzeitzünder zwischen den Freigabe- und Startimpulsen sowie dem anschließenden Signal zur Einstellung der individuellen Verzögerungszeit unterschieden werden. Um dies leicht durchzuführen, ist eine weitere Ausgestaltung der Erfindung dadurch gekennzeichnet, daß die kürzeste Dauer mindestens der ersten von der Zündmaschine gelieferten Impulsfolge für die Zündung um einen vorgegebenen Faktor größer gewählt wird als die längste Dauer der Freigabeimpulsfolge, und daß von dem ersten nach Ende der zweiten Folge oder einer vorgegebenen Anzahl von zweiten Folgen empfangenen Impulse an, an dessen oder deren Ende das Integral des Signalflusses eine vorgegebene zweite Grenze überschritten hat, die von der Zündmaschine empfangenen Signale als Impulsfolge der Zündung gewertet werden.

In vorteilhafter Weise wird das am Ende der ersten Folge der Freigabeimpulse erreichte Integral mit vorgegebenen Grenzwerten verglichen und das Integral bei Überschreitung dieser Grenzwerte auf den Anfangswert zurückgesetzt.

Bei dem eingangs genannten bekannten Verfahren weisen die Sprengzeitzünder einen Energiespeicher auf, dem von außen Energie zugeführt wird und der die Elemente des elektronischen Sprengzeitzünders speist und die Energie zum Zünden des Zündelementes liefert. Um zu verhindern, daß ein Sprengzeitzünder bei starken Störsignalen unkontrolliert auslöst, ist es zweckmäßig, daß die Energiezufuhr zum Energiespeicher des Sprengzeitzünders auf einen Wert zwischen dem zum Speisen der elektronischen Elemente und dem zum Zünden des Zündelements begrenzt wird, bis am Ende der bzw. einer vorgegebenen Anzahl zweiter Folgen von Freigabeimpulsen die Abweichung der beiden Integrale unter der vorgegebenen Grenze liegt und dem Energiespeicher die maximale Energie zugeführt wird. Dadurch ist eine ausreichende Energiezufuhr zum Zündelement erst dann möglich, wenn der Sprengzeitzünder die Folge von Freigabeimpulsen und Startimpulsen richtig verarbeitet hat. Die Nachbildung einer solchen Folge durch Störsignale ist praktisch ausgeschlossen.

Die Erfindung betrifft ferner einen elektronischen Sprengzeitzünder zum Anschluß an eine mindestens eine Impulsfolge für die Zündung liefernde Zündmaschine, mit einer Signalquelle, welche in einer durch die Impulsfolge für die Zündung bestimmten Aufladephase einen ersten Signalfluß zum Aufladen eines Integrators liefert, und mit einer Steuereinrichtung, die nach Ablauf der Aufladephase eine Verzögerungsphase einleitet, in der die Signalquelle einen zweiten Signalfluß zum Integrator liefert, wobei ein Zündsignal erzeugt wird, wenn der Inhalt des Integrators den gespeicherten Integrationswert der Aufladephase erreicht.

Bei einem derartigen Sprengzeitzünder ist erfindungsgemäß vorgesehen, daß die Steuereinrichtung eines jeden Zünders den ersten Signalfluß bei dem ersten Impuls der Impulsfolge für die Zündung einleitet und bis zu einem zünderspezifisch eingestellten m-ten Impuls aufrechterhält und den zweiten Signalfluß bei dem n-ten Impuls der Impulsfolge für die Zündung beginnt, wobei $m \leqslant n$ ist und der erste und der zweite Signalfluß ein zünderspezifisch vorbestimmtes Verhältnis zueinander haben. Die Steuereinrichtung enthält einen Zähler, der bis zum Wert n zählt (modulo-n-Zähler). Durch einen Komparator kann festgestellt werden, wann der Zählwert m erreicht ist. In diesem Fall ist außer dem Zähler nur ein einziger Komparator erforderlich. Anstelle eines Zählers kann auch ein Schieberegister benutzt werden, das von dem ersten Impuls des Zeitsignals durchlaufen wird und das von den Impulsen des Zeitsignals getaktet wird. Ein solches Schieberegister hat n Stufen und jeweils einen Ausgang an der n-ten Stufe und an der m-ten Stufe.

Die Werte beider Signalflüsse stehen in einem festen Teilerverhältnis zueinander, das zünderspezifisch ist. Auf diese Weise kann das Verhältnis der Länge von Aufladephase und Verzögerungsphase für jeden einzelnen Zünder unterschiedlich gemacht werden, wobei die Aufladephasen für alle Zünder gleich lang sind. Es besteht auch die Möglichkeit, die Verzögerungsphase wahlweise größer oder kleiner zu machen als die Aufladephase. In einer bevorzugten Variante sind die Werte m und n stets gleich und die Signalflüsse zünderspezifisch unterschiedlich.

Vorzugsweise enthält die Signalquelle einen Impulsgenerator, dem ein Frequenzteiler nachgeschaltet ist, und der erste Signalfluß läuft über den Frequenzteiler, während der zweite Signalfluß direkt von dem Impulsgenerator zu dem als Zähler ausgebildeten Integrator läuft. Die Signalquelle braucht hierbei nur einen einzigen Impulsgenerator zu enthalten, so daß sichergestellt ist, daß die Impulse in der Aufladephase die gleiche Frequenz haben wie in der Verzögerungsphase. In der Aufladephase findet eine Frequenzunterteilung durch den Frequenzteiler statt. Die Impulsfrequenzen brauchen in beiden Phasen nicht in einem ganzzahligen Verhältnis zueinander zu stehen; der Frequenzteiler kann vielmehr auch so aufgebaut sein, daß er unganzzahlige Teilerverhältnisse (z. B. 3 : 8) ermöglicht. Dies ist mit bekannten PLL-Schaltungen (Phase Locked Loop) möglich.

Bei einer anderen Ausführungsform der Erfindung enthält die Signalquelle zwei Konstantstromquellen mit unterschiedlichen Stromwerten und der Integrator enthält einen Ladekondensator. Hierbei erfolgt die Aufladung und Entladung des Integrators in analoger Schaltungstechnik, wobei die eine Konstantstromquelle eine Quelle und die andere Konstantstromquelle eine Senke für den Integratorstrom bilden kann.

In einer anderen bevorzugten Variante sind der erste und zweite Signalfluß stets gleich und der Wert für m zünderspezifisch unterschiedlich.

Um die Sicherheit bei dem Aufladen und ggf. Entladen des Integrators und beim Erzeugen des Zündsignals zu erhöhen, ist es zweckmäßig, daß bei dem erfindungsgemäßen elektronischen Sprengzeitzünder die Steuereinrichtung einen mit einem Speicherelement verbundenen Zähler enthält und daß ein Ausgang für eine vorgegebene Zählerstellung des Zählers entsprechend der Summe der Anzahl der in einer ersten und einer darauffolgenden zweiten Folge von der Zündmaschine übertragenen Freigabeimpulse mit einem Umschalteingang des Speicherelements verbunden ist und dieses umschaltet, wenn ein am Ende der ersten Folge von Freigabeimpulsen im Intergrator gebildetes Integral von einem am Ende der zweiten Folge von Freigabeimpulsen gebildeten Integrals um weniger als einen vorgegebenen Wert abweicht, und daß das Speicherelement nur im umgeschalteten Zustand die Auslösung der Zündung freigibt. Auf diese Weise wird zunächst geprüft, ob der Sprengzeitzünder die von der Zündmaschine gelieferten Signale ordnungsgemäß empfangen und verarbeiten kann, bevor die Erzeugung eines Zündsignals freigegeben ist. Zweckmäßig sperrt das Speicherelement vor dem Umschalten die Aufladung und ggf. Entladung des Integrators zur Erzeugung des Zündsignals.

Um die Sicherheit weiter zu erhöhen, kann eine Überwachungsschaltung vorgesehen werden, die den Integrator und den Zähler auf deren Anfangsstellung zurücksetzt, wenn das Integral am Ende der ersten Folge von Freigabeimpulsen außerhalb vorgegebener erster Grenzen liegt.

In einer anderen vorteilhaften Ausführungsform kann vorgesehen sein, daß die Überwachungsschaltung den Integrator und den Zähler außerdem auf die Anfangsstellung zurücksetzt, wenn nach dem Umschalten des Speicherelements das Integrals am Ende eines empfangenen Impulses außerhalb vorgegebener zweiter Grenzen liegt.

Für eine weitere Erhöhung der Sicherheit bei elektronischen Sprengzeitzündern, bei dem ein von außen gespeister Energiespeicher für den Betrieb der elektronischen Elemente und des Zündelementes vorhanden ist, gibt erst das umgeschaltete Speicherelement die Aufladung des Energiespeichers auf einen für die Zündung des Zündelementes ausreichenden Werte frei. Auf diese Weise ist eine vorzeitige Auslösung der Zündung durch Störsignale praktisch ausgeschlossen.

Im folgenden werden unter Bezugnahme auf die Zeichnungen Ausführungsbeispiele der Erfindung näher erläutert.

Es zeigen:

Fig. 1 einen Zündkreis mit genauerer Darstellung eines einzelnen Zünders i,
Fign. 2 bis 5 verschiedene Varianten für den Verzögerungszeitmodul des Zünders i,
Fig. 6 eine Variante zu Fig. 3 oder Fig. 5,
Fig. 7 eine Schaltungsanordnung, bei der die Einstellung der Verzögerungszeit und die Auslösung erst nach einer Entsicherungsphase durchgeführt wird und
Fig. 8 Zeitdiagramme zur Erläuterung der Funktion der Schaltung nach Fig. 7.

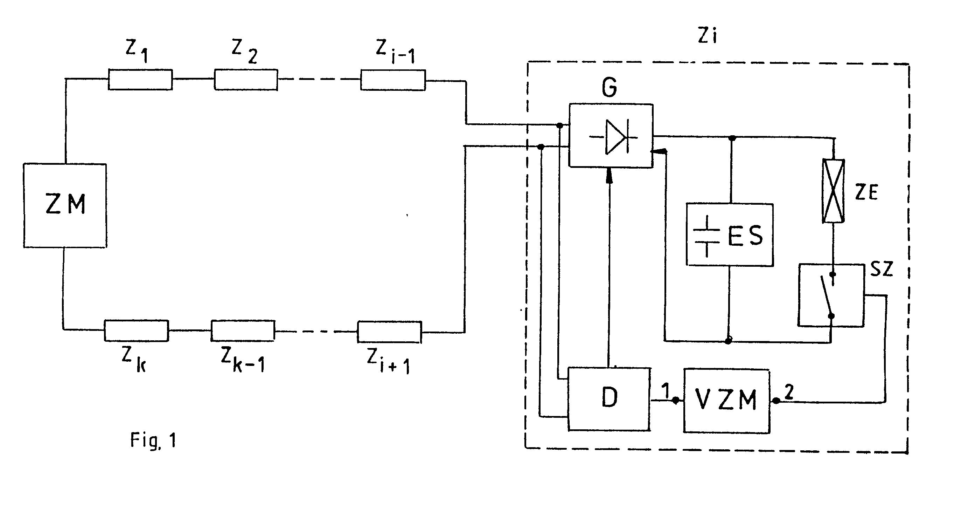

Gemäß Fig. 1 sind in einer Reihenschaltung k Zünder $Z_l$ bis $Z_k$ und die zugehörige Zündmaschine ZM angeordnet. Die Zündmaschine hat die Aufgabe, die Zünder mit Energie zu versorgen und Signale an diese zu liefern, welche die Zeit T bestimmen und die Zündung zum richtigen Zeitpunkt einleiten.

Der gestrichelt umrandete Teil des Blockschaltbildes zeigt einen möglichen Innenaufbau des Elektronikteils des Zünders $Z_i$. Zur Energieversorgung, zur Eingabe der Verzögerungsintervallänge $\Delta t$ und zur Einleitung der Auslösung aller Zünder $Z_k$ liefert die Zündmaschine ZM verschieden codierte Ströme, die im Decodierer D decodiert werden. Die Codierung kann über Frequenz-, Amplituden- und/oder Pulscode-Modulation erfolgen.

Bei richtiger Erkennung des Codes ergibt sich der folgende Ablauf: Der als Kondensator ausgeführte Energiespeicher ES wird über den Gleichrichter G aufgeladen und liefert die Betriebsspannung für den gesamten Elektronikteil und die Energie zur Zündung des elektrischen Zündelementes ZE. Zur Vereinfachung der zeichnerischen Darstellung sind dabei die elektrischen Verbindungen vom Energiespeicher ES zum gesamten Elektronikteil nicht gezeigt. Im Verzögerungszeitmodul VZM, dessen Eingang 1 mit dem Decodierer D und dessen Ausgang 2 mit dem elektronischen Zündschalter SZ, z. B. einem Thyristor, verbunden ist, wird die Verzögerungszeit $\Delta T$ des einzelnen Zünders realisiert. Dies erfolgt bevorzugt digital durch den Vergleich interner Zählerstände, aber ggf. auch analog, z. B. durch den Vergleich von Aufladespannungen von Kondensatoren. Nach Ablauf der Zeit $\Delta T$ wird der Schalter SZ geschlossen, woraufhin der Energiespeicher ES über das Zündelement ZE entladen und dieses gezündet wird.

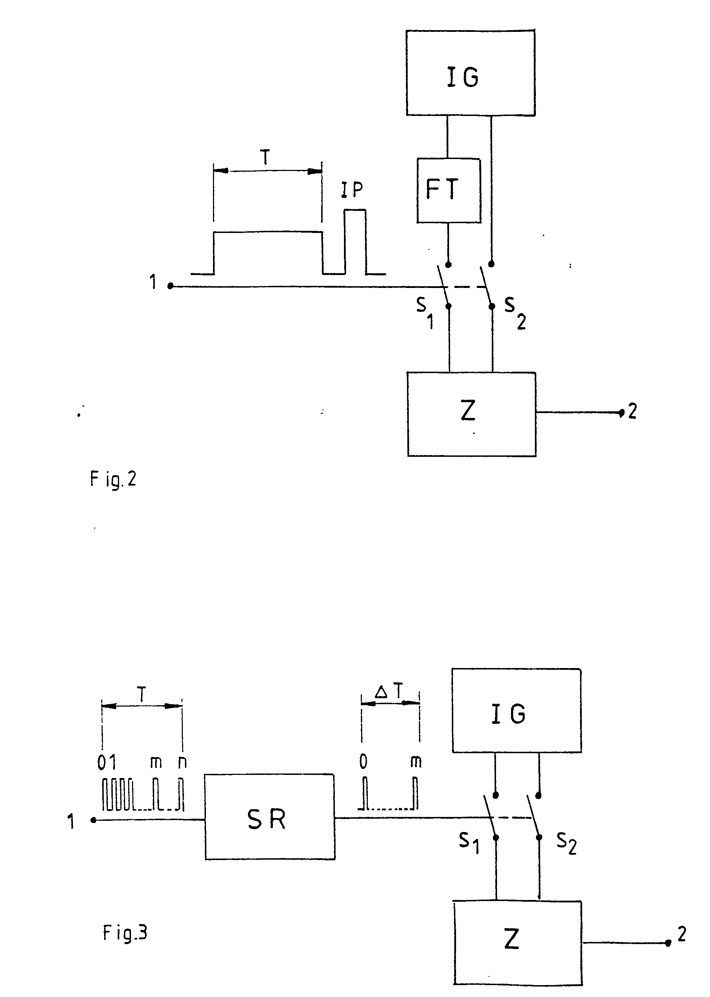

In Fig. 2 ist ein Verzögerungszeitmodul VZM auf digitaler Basis für sich allein dargestellt. In der Programmierphase wird über den Eingang 1 während der Zeitdauer T ein Signal zugeführt. Bei dessen Beginn wird der Schalter $S_1$ geschlossen, woraufhin vom Impulsgenerator IG über den Frequenzteiler FT und den Schalter $S_1$ Impulse in den Zähler Z eingezählt werden. Der Frequenzteiler arbeitet so, daß bei einem Eingang von n Impulsen nur m Impulse den Teiler verlassen. Dabei ist das Verhältnis von m zu n fest in den Frequenzteiler des jeweiligen Zünders eingegeben. In den Zähler Z gelangen dabei während der Schließzeit T des Schalters $S_1$ die Anzahl $\frac{m}{n} \cdot f_i \cdot T$ Impulse, wobei $f_i$ die Frequenz des Impulsgenerators IG des i-ten Zünders ist.

Nach Ablauf der Zeitdauer T wird der Schalter $S_1$ geöffnet und in der Auslösephase der Schalter $S_2$ gleichzeitig oder auch später mittels eines entsprechenden Signales, beispielsweise eines separaten Impulses IP, der das Zündsignal darstellt, geschlossen. Daraufhin werden vom Impulsgenerator IG die Impulse direkt in den Zähler Z in der Weise eingezählt, daß dessen Zählerinhalt zurückgezählt wird. Wenn der Zähler Z dabei wieder seinen Anfangszustand erreicht hat, wird über den Ausgang 2 - wie bei Fig. 1 beschrieben - ein entsprechendes Signal an den Zündschalter SZ gegeben. Anstelle dessen könnte auch vorgesehen werden, die Impulse in einen zweiten Zähler mit gleichem Anfangszustand zu zählen, wobei, wenn dieser den gleichen Endzustand wie der erste Zähler erreicht hat, wieder über den Ausgang 2 ein entsprechendes Signal an den Zündschalter SZ gegeben wird.

In einem Zahlenbeispiel hierzu sei angenommen, daß der Schalter $S_1$ für die Dauer T = 3 s geschlossen wird. Bei einer Frequenz $f_i$ des Impulsgenerators IG von 5000 Hz gelangen in den 3 s auf den Frequenzteiler FT 15000 Impulse. Bei einer Frequenzteilung mit beispielsweise n = 64 und m = 24 gelangen 5625 Impulse in den Zähler Z. Nach Schließen des Schalters $S_2$ wird dann entsprechend dem Verhältnis von 5625 zu 5000 nach 1,125 s das Zündelement ZE ausgelöst, da dann im Zähler Z der gleiche Zählerstand wie im Schritt zuvor, nämlich 5625 eingelaufene Impulse, erreicht ist.

Hätte der Impulsgenerator eine Frequenz $f_i$ = 6000 Hz, wären in T = 3 s bei gleichem Teilungsverhältnis von 24 zu 64 des Frequenzteilers FT 6750 Impulse in den Zähler Z gelangt, und bei Schließen des Schalters $S_2$ würde dann gleichfalls entsprechend dem Verhältnis von 6750 zu 6000 nach 1,125 s das Zündelement ZE gezündet werden.

Dieses Verfahren gewährleistet in vorteilhafter Weise, daß die Verzögerungsintervallänge $\Delta t$ nicht mehr im Zünder fest eingegeben werden muß, d.h. nicht mehr zünderspezifisch ist, sondern von der Zündmaschine her durch die Zeit T variiert werden kann. Weiterhin ist bei digitaler Schaltungstechnik gewährleistet, daß die Verzögerungszeit unabhängig von der Frequenz des Impulsgenerators und damit von den Toleranzen der elektronischen Bauteile und den Umwelteinflüssen ist. Die Genauigkeit der Verzögerungszeit $\Delta T$ wird daher ausschließlich durch die Kurzzeitstabilität des Impulsgenerators IG bestimmt, die den in der Praxis auftretenden Anforderungen ohne weiteres Rechnung trägt. Aufgrund der Digitaltechnik ist auch der Frequenzteiler FT unabhängig von den Toleranzen seiner Bauelemente.

Da in allen Zündern eines Zündkreises die Schalter $S_1$ gleich lang für die Zeitdauer T geschlossen sind, haben alle Zünder gleicher Zeitstufe m die gleiche Verzögerungszeit. Die Zeitstufe m ist durch das fest programmierte Verhältnis m/n im Frequenzteiler vorgegeben. Das von der Zündmaschine frei programmierbare Verzögerungszeitintervall $\Delta t$ ist für alle Zünder unabhängig von deren Zeitstufe gleich lang.

Bei dem in Fig. 3 gezeigten Verzögerungszeitmodul, der gleichfalls in digitaler Schaltungstechnik ausgeführt ist, werden in der Programmierphase über den Eingang 1 von der Zündmaschine ZM Impulse mit der Frequenz $f_{ZM}$ dem Schieberegister SR zugeführt. Der erste Impuls schließt den Schalter $S_1$ und der m-te Impuls, wobei die Anzahl von m Impulsen zünderspezifisch ist - oder ggf. auch ein Impuls, der einem ganzzahligen Vielfachen von m entspricht - öffnet den Schalter $S_1$ wieder. Für die Schließzeit $\Delta T$, welche gleich der Verzögerungszeit eines Zünders mit der Zeitstufe m ist, gilt somit

$$\Delta T = \tfrac{1}{f_{ZM}} \cdot m.$$

Die Schließzeit und damit auch die Verzögerungszeit ist somit durch die mit der Zündmaschine ZM wählbare Frequenz einstellbar.

Während der Schließzeit des Schalters $S_1$ werden mit der Frequenz $f_i$ des internen Impulsgenerators IG eine Anzahl von $\Delta T \cdot f_i = N_i$ Impulse in den Zähler Z eingezählt.

Ein weiterer Impuls der Zündmaschine ZM, der wiederum den eigentlichen Zündimpuls darstellt, schließt in der Auslösephase nach vorgegebener Zeit

$$t \geqslant T = \frac{1}{f_{ZM}} \cdot n$$

gleichzeitig bei allen Zündern eines Zündkreises den Schalter $S_2$, so daß der Zählerinhalt $N_i$ mit der Taktfrequenz $f_i$ auf Null zurückgezählt oder ein zweiter Zähler ebenfalls bis $N_i$ vollgezählt wird. Bei Erreichen des Zählerinhaltes Null bzw. $N_i$ wird über den Ausgang 2 die Zündung eingeleitet.

Anstelle des Schieberegisters kann auch ein Zähler mit Decodierer, ein Frequenzteiler o.dgl. verwendet werden.

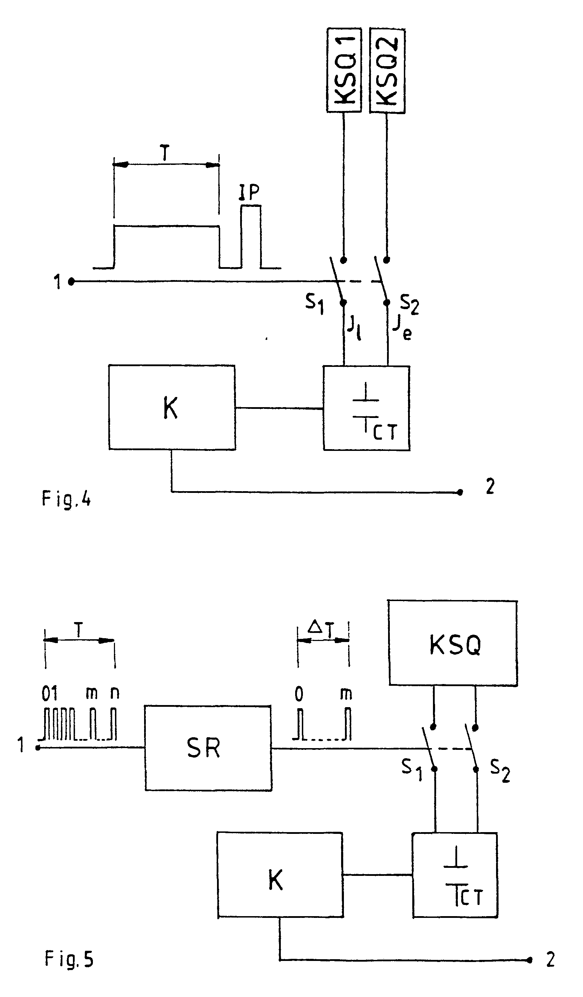

In Fig. 4 ist ein Verzögerungszeitmodul in analoger Schaltungstechnik gezeigt. Durch geeignete Signale - wie z. B. im Zusammenhang mit Fig. 2 beschrieben - wird der Schalter $S_1$ in der Programmierphase für die Zeit T geschlossen. Während dieser Zeit wird der Zeitkondensator CT aus der Konstantstromquelle KSQ1 mit dem Ladestrom $I_1$ von der Anfangsspannung $U_1$ auf die Endspannung $U_2$ aufgeladen. Der Ladestrom $I_1$ verhält sich zum später fließenden Entladestrom $I_e$ wie $\Delta T$ zu T. Nach einer Zeit $t \geqslant T$ wird zur Auslösung durch das für alle Zünder gleiche Zündsignal der Zündmaschine ZM der Schalter $S_2$ geschlossen und der Zeitkondensator CT durch die als Stromsenke arbeitende Konstantstromquelle KSQ2 mit dem Entladestrom $I_e$ entladen. Wenn der Zeitkondensator CT wieder die Anfangsspannung $U_1$ erreicht hat, wird von dem nachgeschalteten Komparator K über den Ausgang 2 ein Signal an den Zündschalter SZ abgegeben und die Zündung eingeleitet.

Die Einstellung der Zeitstufe $m/n = I_1 / I_e$ ist durch das Verhältnis der Ströme bestimmt.

In Fig. 5 ist ein weiteres Ausführungsbeispiel eines Verzögerungszeitmoduls in analoger Schaltungstechnik gezeigt, bei dem die Einstellung der Zeitstufe m des Zünders über das Schieberegister SR entsprechend Fig. 3 erfolgt. Durch geeignete Signale - wie es z. B. im Zusammenhang mit Fig. 3 beschrieben ist - wird der Schalter $S_1$ über das Schieberegister SR für die Zeit $\Delta T$ geschlossen. Während dieser Zeit lädt der Konstantstrom $I_1$, der Konstantstromquelle KSQ den Zeitkondensator CT von der Anfangsspannung $U_1$ auf die Endspannung $U_2$ auf. Nach Ablauf der Zeit $\Delta T$ wird der Schalter $S_1$ geöffnet. Durch ein weiteres für alle Zünder gleiches Zündsignal der Zündmaschine wird dann der Schalter $S_2$ geschlossen und der Zeitkondensator CT über die jetzt als Stromsenke arbeitende KSQ mit dem Entladestrom $I_e$, der gleich dem Ladestrom $I_1$ ist, entladen. Erreicht der Zeitkondensator CT die Anfangsspannung $U_1$, so wird vom Komparator K über den Ausgang 2 ein Signal an den Zündschalter SZ abgegeben und die Zündung eingeleitet. Die Streuung der Verzögerungszeit $\Delta T$ ist dabei nur abhängig von den Kurzzeittoleranzen des Zeitkondensators CT, der Konstantstromquelle KSQ und des Komparators K.

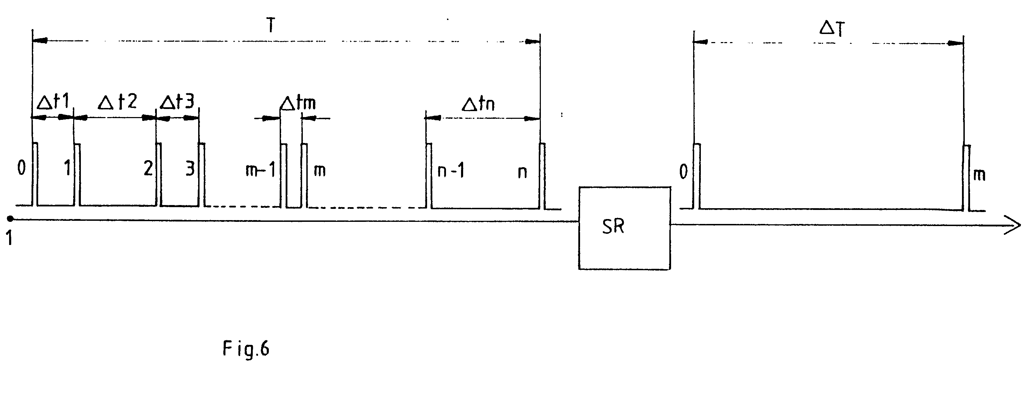

In Fig. 6 ist eine weitere Möglichkeit der Zeiteingabe gemäß dem in Fign. 3 und 5 wiedergegebenen Prinzip dargestellt. Hier ist die Frequenz der von der Zündmaschine ZM in der Programmierphase abgegebenen Impulse während der Zeit T nicht mehr konstant, sondern variabel. Das bedeutet, daß der zeitliche Abstand zwischen dem Startimpuls 0 und dem die erste Zeitstufe 1 bestimmenden Impuls 1 ein anderer ist, als der zwischen dem Impuls 1 und dem weiteren Impuls 2 usw.

Dabei gilt für die Verzögerungszeit der m-ten Zeitstufe ganz allgemein

$$\Delta T_m = \sum_{1}^{m} \Delta t_i.$$

Zum Beispiel kann im konkreten Falle vorgesehen sein, daß der die erste Zeitstufe festlegende Impuls 10 ms nach dem Startimpuls 0 erscheint, d.h. $\Delta t_1 = 10$ ms ist. Der zweite Impuls möge 30 ms später erscheinen, also insgesamt 40 ms nach dem Startimpuls, der dritte Impuls z. B. 20 ms später, also 60 ms nach dem Startimpuls, der vierte Impuls z. B. 500 ms später, also 560 ms nach dem Startimpuls, usw. Von der Zündmaschine ZM wird also für jede Zeitstufe m ein spezielles $\Delta T_m$ vorgegeben, wobei immer $\Delta T_m > \Delta T_{m-1}$ ist. Dieses Verfahren bietet den Vorteil, daß für jede Zeitstufe m eine beliebige Verzögerungszeit $\Delta T$ von der Zündmaschine aus eingestellt werden und man so den sprengtechnischen Anforderungen, ggf. mit weiter verringerter Zeitstufenzahl, noch besser Rechnung tragen kann. Die Auslösephase wird auch wieder durch ein weiteres für alle Zünder gleiches Signal, dem Zündsignal, von der Zündmaschine ZM her eingeleitet, das das Schließen des Schalters $S_2$ und den weiteren Ablauf wie bei Fig. 3 oder 5 beschrieben bewirkt. Es wird unterschiedlich bestimmt, wann $S_1$ öffnet.

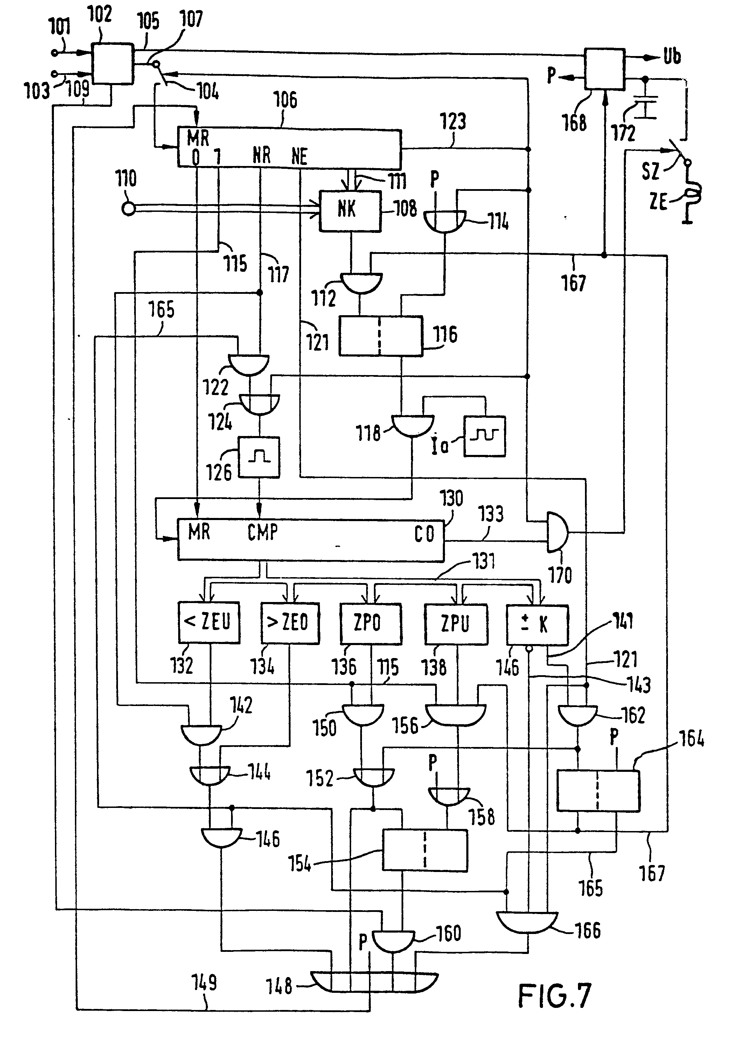

Die Fig. 7 zeigt eine Schaltungsanordnung, mit der nicht nur die Verzögerungszeit zum Auslösen des Zündschalters SZ eingestellt werden kann, sondern bei der die Einstellung der Verzögerungszeit und die Auslösung erst nach einer Entsicherungsphase durchgeführt wird. Die Anordnung ist über die Anschlüsse 101 und 103 an die Zündmaschine angeschlossen und empfängt von dieser zunächst die Entsicherungssignale und dann die Signale zum Einstellen der Verzögerung und zum Auslösen der Zündung. Ferner wird aus diesen Signalen die Stromversorgung der in der Figur dargestellten Anordnung gewonnen.

Dies erfolgt in der Einheit 102, mit der die beiden Anschlüsse 101 und 103 verbunden sind und die die darauf ankommenden Signale gleichrichtet, um eine Verpolung der Eingangsleitungen zuzulassen und insbesondere auch um Signale, die als bipolare Wechselstromimpulse eintreffen, verarbeiten zu können. Die daraus gewonnene Spannung wird über den Ausgang 105 einer Regelschaltung 168 zugeführt, die damit einen Kondensator 172 auflädt und von dieser Ladespannung eine geregelte Betriebsspannung UB ableitet, die die Betriebsspannung der elektronischen Elemente der Anordnung darstellt. Dabei wird die Ladespannung des Kondensators 172 in bestimmter Weise gesteuert, wie später erläutert wird. Ferner erzeugt die Regelschaltung 168 am Ausgang P zu Beginn des ersten zugeführten Signals einen Impuls, der verschiedene Elemente der dargestellten Anordnung in eine Anfangsstellung zurücksetzt, wie ebenfalls später erläutert wird.

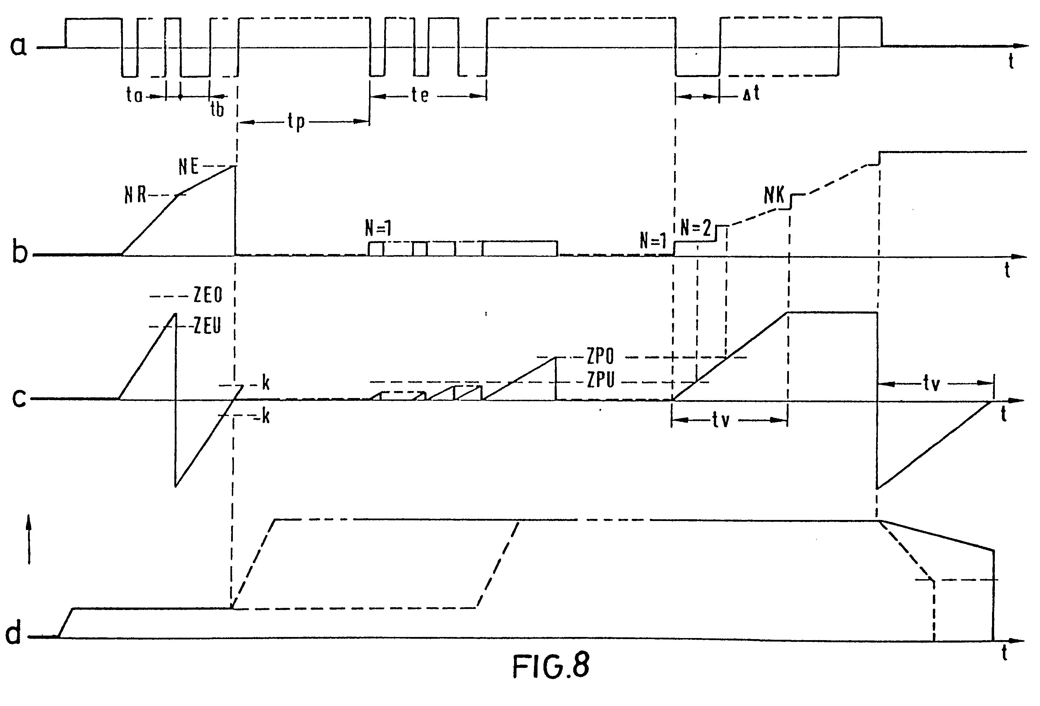

Die Einheit 102 erzeugt ferner mit jeder Flanke bzw. jeder Vorderflanke der über die Anschlüsse 101 und 103 zugeführten Wechselstromimpulse ein kurzzeitiges Signal auf der Leitung 109 sowie ein darauf folgendes Taktsignal auf der Leitung 107, das über den Schalter 104 dem Zähltakteingang eines Zählers 106 zugeführt wird. Die dadurch ausgelösten Funktionen werden anhand der Zeitdiagramme in Fig. 8 erläutert.

In Fig. 8 ist in Zeile a das über die Anschlüsse 101 und 103 eintreffende Wechselstromsignal aufgetragen. Zunächst wird über die Anschlüsse 101 und 103 ein etwas längeres Signal übertragen, dessen Zeitdauer nicht genau definiert sein muß, sondern lediglich ausreichen muß, um den Kondensator 172 auf eine vorgegebene Mindestspannung aufzuladen. Diese Aufladespannung des Kondensators ist in der Zeile d dargestellt, und sie reicht aus, um die erforderliche Betriebsspannung für die elektronischen Elemente zu liefern, jedoch nicht, um das Zündelement ZE zu zünden, wenn der Zündschalter SZ geschlossen wäre.

Als nächstes erscheinen eine Anzahl von symmetrischer Impulse mit jeweils einer Impulsdauer ta. Diese werden über den zunächst geschlossenen Schalter 104 dem Zähltakteingang des Zählers 106 zugeführt und schalten diesen weiter, und zwar beginnend von der Nullstellung, auf die er durch den bereits erwähnten Anfangsimpuls P über das ODER-Glied 148, die Leitung 149 und den Eingang MR des Zählers 106 gesetzt wurde. Solange sich der Zähler 106 in der Nullstellung befand, wurde über den Eingang MR eines weiteren Zählers 130 dieser ebenfalls in seiner Nullstellung gehalten.

Sobald der Zähler 106 seine Nullstellung verläßt, kann der Zähler 130 die Taktimpulse, die von dem Impulsgenerator IG über das UND-Glied 118 geliefert werden, weiter zählen. Dabei ist die Periodendauer dieser Taktimpulse wesentlich kleiner als die Impulsdauer ta der über die Anschlüsse 101 und 103 zugeführten Wechselstromimpulse. Das UND-Glied 118 ist durch ein entsprechendes Ausgangssignal des Flip-Flops 116 freigegeben, das durch den Anfangsimpuls P über das ODER-Glied 114 in diese Stellung gesetzt wurde. Der Zähler 106 zählt die weiteren eintreffenden Wechselstromimpulse, und entsprechend zählt der Zähler 130 die Taktimpulse des Impulsgenerators IG, so daß beide Zählerstellungen, allerdings in unterschiedlichem Maß, ansteigen, wie dies in den Zeilen b für den Zähler 106 und in der Zeile c der Fig. 8 für den Zähler 130 angedeutet ist. Dabei sind die Zählerstellungen der Einfachheit halber kontinuierlich ansteigend dargestellt, obwohl es sich tatsächlich um eine stufenweise Erhöhung der Zählerstellung handelt.

Sobald der Zähler 106 die Stellung NR erreicht hat, wird über die Leitung 117 ein Signal abgegeben, das den UND-Gliedern 122 und 142 zugeführt wird. Das UND-Glied 122 ist über die Leitung 165 freigegeben, die von dem Flip-Flop 164 kommt, das durch den Anfangsimpuls P in die entsprechende Lage gesetzt wurde. Damit gelangt das Signal von der Leitung 117 über das ODER-Glied 124 auf den Impulsformer 126, der einen kurzen Impuls erzeugt, der dem Eingang CMP des Zählers 130 zugeführt wird und dessen Inhalt invertiert, d.h. in einen gleich großen negativen Zählerstand umwandelt. Dies ist in Fig. 8 in der Zeile c zu erkennen.

Der andere Eingang des UND-Gliedes 142 wird von dem Ausgang eines Decodierers 132 gespeist, der an die Ausgänge 131 des Zählers 130 angeschlossen ist und ein Signal abgibt, solange die Zählerstellung unter einem bestimmten Wert liegt, der hier mit ZEU bezeichnet ist. Damit wird u.a. berücksichtigt, daß den von der Zündmaschine erzeugten Impulsen Störimpulse überlagert sein können, die den Zähler 106 schneller als vorgesehen weitergezählt haben oder, was noch wahrscheinlicher ist, daß beim Einsetzen der Sprengladungen mit den Zündern vor dem Anschließen an die Zündmaschine Störsignale aufgenommen sein können, die die Anordnung in einen nicht definierten Zustand gesetzt haben.

Wenn also beim Erreichen der Zählerstellung NR durch den Zähler 106 der Zähler 130 noch nicht die untere Zählerstellung ZEU erreicht hat, erzeugt das UND-Glied 142 am Ausgang ein Signal, das über das ODER-Glied 144 dem einen Eingang eines UND-Gliedes 146 zugeführt wird, dessen anderer Eingang mit der Leitung 165 verbunden ist, die das UND-Glied 146 freigibt. Damit wird dem entsprechenden Eingang des ODER-Gliedes 148 ein Signal zugeführt, das über die Leitung 149 und den Eingang MR des Zählers 106 diesen auf die Nullstellung zurücksetzt und für den nächsten Entsicherungsvorgang vorbereitet, der mindestens einmal wiederholt wird. Auch der Zähler 130 wird dadurch auf Null gesetzt.

Wenn der Zähler 130 bei Erreichen der Stellung NR durch den Zähler 106 die Zählerstellung ZEU überschritten hat, jedoch außerdem auch die Stellung ZEO überschritten hat, wird dies von einem ebenfalls an den Ausgang 131 des Zählers 130 angeschlossenen Decodierer 134 erkannt, der dann ein Ausgangssignal abgibt, das über das ODER-Glied 144 das UND-Glied 146 usw. den Zähler 106 auf die Anfangsstellung zurücksetzt. Dieses Zurücksetzen erfolgt im übrigen unmittelbar mit dem Erreichen der Zählerstellung ZEO durch den Zähler 130, auch wenn dies vor Erreichen der Zählerstellung NR durch den Zähler 106 stattfindet. Damit wird beispielsweise berücksichtigt, daß etwa durch schlechte Kontakte oder Kurzschlüsse einige von der Zündmaschine erzeugten Wechselstromimpulse nicht richtig über die Leitungen 101 und 103 eingetroffen sind.

Bei der Festlegung der beiden Zählerstellungen ZEV und ZEO ist vorausgesetzt, daß die Taktfrequenz des Impulsgenerators IG zwischen vorgegebenen Grenzen liegt, was bei der Herstellung der Anordnung vor dem Zusammenbau des Zünders gemessen wird.

Wenn die Impulse von der Zündmaschine bis zur Zählerstellung NR des Zählers 106 richtig empfangen worden sind, wobei diese Anzahl auch in der Zündmaschine festgelegt ist, werden von dieser anschließend Impulse mit doppelter Impulsdauer übertragen. Während dieser Zeit zählt nun der Zähler 130 von der negativen Zählerstellung, die wie erwähnt durch Invertierung erzeugt wurde, in Vorwärtsrichtung weiter. Die Maßnahme der Invertierung ist hier aus technischen Gründen gewählt worden, statt dessen hätte auch die Zählrichtung des Zählers 130 umgekehrt werden können.

Sobald der Zähler 106 die Zählerstellung NE erreicht hat die wegen der Verdopplung der Impulsdauern gleich dem 1,5-fachen der Zählerstellung NR ist, muß der Zähler 130 im Idealfall wieder die Nullstellung erreicht haben. Da die Zähltakte der beiden Zähler 106 und 130 jedoch asynchron zueinander sind und außerdem kleine Frequenzschwankungen auftreten, wird angenommen, daß die Anordnung die von der Zündmaschine erzeugten Impulse ordnungsgemäß verarbeitet hat, wenn der Zähler 130 mit Erreichen der Zählerstellung NE durch den Zähler 106 um nicht mehr als k Stellungen von der Nullstellung abweicht, d.h. entweder mindestens die Zählerstellung -k oder keine höhere als die Zählerstellung k erreicht hat. Dies wird in dem Decodierer 140 geprüft, der ebenfalls an den Ausgang 131 des Zählers 130 angeschlossen ist. Falls also die Abweichung der Zählerstellung des Zählers 130 von der Nullstellung kleiner als k Stellungen ist, erzeugt der Decodierer 140 am Ausgang 141 ein Signal, das zusammen mit dem Signal auf der Leitung 121 bei der Zählerstellung NE des Zählers 106 ein Signal am Ausgang des UND-Gliedes 162 erzeugt, so daß das Flip-Flop 164 umgeschaltet wird und nunmehr auf der Leitung 167 anstatt auf der Leitung 165 ein Signal auftritt. Ferner schaltet das Ausgangssignal des UND-Gliedes 162 über das ODER-Glied 152 das Flip-Flop 154 um und setzt über das ODER-Glied 148 usw. den Zähler 106 in die Nullstellung, wodurch auch der Zähler 130 in die Nullstellung gesetzt wird, wie aus Fig. 8 zu erkennen ist. Mit dem Umschalten des Flip-Flops 164 ist die Entsicherungsphase beendet, da dieses Flip-Flop 164 nun nicht mehr zurückgesetzt wird, und die Programmierphase kann beginnen.

Wenn jedoch bei der Zählerstellung NE des Zählers 106 die Abweichung von der Nullstellung größer als k Stellungen ist, erzeugt der Decodierer 140 am Ausgang 143 ein Signal, das mit dem Signal auf der Leitung 121 und dem Signal auf der Leitung 165 des Flip-Flops 164, das sich nun noch in der Ruhestellung befindet, ein Signal am Ausgang des UND-Gliedes 166 erzeugt, das über das ODER-Glied 148 und die Leitung. 159 wieder den Zähler 106 und damit auch den Zähler 130 in die Nullstellung setzt. Damit ist die Anordnung bereit, eine erneute Folge von Entsicherungsimpulsen zu empfangen, die von der Zündmaschine grundsätzlich mindestens einmal wiederholt wird.

Nachdem das Flip-Flop 164 umgeschaltet wurde, wird nun über das Signal auf der Leitung 167 in der Regelschaltung 168 der Kondensator 172 auf die maximale Spannung aufgeladen, die mit dem gerade anliegenden Signal von der Zündmaschine, wie aus der Zeile a der Fig. 8 zu erkennen ist, möglich ist. Dafür ist eine Pausenzeit tp vorgesehen. Nach dieser Pausenzeit beginnt eine neue Entsicherungsphase, die wieder die Zeitdauer te beansprucht. Bei umgeschaltetem Flip-Flop 164 wird nun mit jeder Flanke der Wechselstromimpulse durch das dabei erzeugte Signal auf der Leitung 109 in beschriebener Weise der Zähler 106 und auch der Zähler 130 erneut in die Nullstellung gesetzt, und durch den unmittelbar darauf folgenden Impuls auf der Leitung 107 wird der Zähler 106 in die Stellung 1 geschaltet, so daß der Zähler 130 das Taktsignal des Impulsgenerators IG zählen kann, denn das Flip-Flop 116 befindet sich weiterhin noch in der Stellung, in der es das UND-Glied 118 freigibt. Dieses periodische Rücksetzen auf die Nullstellung ist in Fig. 8 in den Zeilen b und c dargestellt.

Am Ende der zweiten Entsicherungsphase te tritt nach der letzten Flanke der Wechselstromimpulse eine längere Pause auf, während der der Zähler 130 die Stellung ZPU überschreitet, die er vorher nicht erreichen konnte, da die Dauer der Impulse während der Entsicherungsphasen hierfür zu kurz waren und beide Zähler 106 und 130 vorher bereits wieder auf die Nullstellung zurückgesetzt wurden. Sobald nun die Stellung ZPU erreicht ist, erzeugt der Decodierer 138, der ebenfalls an den Ausgang 131 des Zählers 130 angeschlossen ist, ein Ausgangssignal, und da sich der Zähler 106 noch in der Stellung 1 befindet, ist auf der Leitung 115 ein Signal vorhanden und ebenso auf der Leitung 167 vom Flip-Flop 164, so daß das UND-Glied 156 ein Ausgangssignal erzeugt und über das ODER-Glied 158 das Flip-Flop 154 zurücksetzt, so daß danach über das UND-Glied 160 keine Rücksetzimpulse für den Zähler 106 erzeugt werden können. Auf diese Weise werden die Entsicherungsimpulse in der Verarbeitung von den Programmierimpulsen zum Einstellen der Verzögerungszeit, die eine längere Dauer haben, unterschieden, wie später erläutert wird.

Da jedoch die Pause nach jeder Entsicherungsphase wesentlich länger ist als der längste vorkommende Programmierimpuls, erreicht der Zähler 130 schließlich die Stellung ZPO. Bei Erreichen dieser Stellung gibt der Decodierer 136, der ebenfalls an den Ausgang 131 des Zählers 130 angeschlossen ist, ein Ausgangssignal ab, und da der Zähler 106 sich immer noch in der Stellung 1 befindet und die Leitung 115 ein Signal führt, erzeugt das UND-Glied 150 und damit das ODER-Glied 152 ein Ausgangssignal, das zum einen über das ODER-Glied 148 und die Leitung 149 die Zähler 106 und 130 zurücksetzt und zum anderen das Flip-Flop 154 wieder zurückschaltet, so daß anschließend über das UND-Glied 160 wieder weitere Rücksetzimpulse zum Nullsetzen des Zählers 106 erzeugt werden, wodurch in beschriebener Weise der Zähler 130 ebenfalls auf Null gesetzt wird. Auf diese Weise wird die Pause in den empfangenen Wechselstromimpulsen bzw. genauer die länger andauernde Aufrechterhaltung eines etwa konstanten Impulspotentials von den nachfolgenden Programmierimpulsen unterschieden. Es sei an dieser Stelle darauf hingewiesen, daß die Fig. 8 nicht maßstabsgerecht ist.

Mit dem ersten Programmierimpuls mit der Dauer Δt schaltet der Zähler 106 in die Stellung 1, und der Zähler 130 beginnt von der Nullstellung an zu zählen. Da der minimale Wert der Impulsdauer Δt der Programmierimpulse so groß ist, daß der Zähler 130 die Stellung ZPU überschreitet, solange der Zähler 106 sich noch in der Stellung 1 befindet, wird das Flip-Flop 154 umgeschaltet, so daß das UND-Glied 160 wieder gesperrt wird und anschließend die folgenden Flanken der empfangenen Wechselstromimpulse keine Rücksetzimpulse für den Zähler 106 mehr erzeugen können. Andererseits erreicht der Zähler 130 mit den folgenden Programmierimpulsen die Stellung ZPO erst, nachdem der Zähler 106 die Stellung 1 verlassen hat, so daß das UND-Glied 150 durch das nun fehlende Signal auf der Leitung 115 gesperrt ist und das Flip-Flop 154 nicht wieder zurückschaltet.

In dieser Weise zählt der Zähler 130 die Impulse des Impulsgenerators IG weiter, bis der Zähler 106 die Stellung Nk erreicht hat. Diese Stellung wird über einen Mehrfacheingang 110 vorgegeben und einem Decodierer 108 zugeführt, der außerdem an die Ausgänge 111 des Zählers 106 angeschlossen ist und bei Übereinstimmung der Signalkombinationen an den beiden Mehrfacheingängen ein Ausgangssignal erzeugt und dem UND-Glied 112 zuführt, das über die Leitung 167 freigegeben ist, so daß das Flip-Flop 116 umschaltet und das UND-Glied 118 sperrt, wodurch der Zähler 130 keine Taktimpulse mehr von dem Taktimpulsgenerator IG erhält. Damit bleibt die in diesem Augenblick durch den Zähler 130 erreichte Stellung erhalten, die damit wie bereits beschrieben ein Maß für die programmierte Verzögerungszeit darstellt.

Unabhängig davon treffen jedoch noch weitere Programmierimpulse ein, bis schließlich der Zähler 106 vollgezählt ist und am Ausgang 123 ein Überlaufsignal erzeugt. Dieses Überlaufsignal öffnet den Schalter 104, so daß der Zähler 106 in dieser Endstellung stehen bleibt und nicht auf seine Nullstellung zurückkehren kann, da sonst auch der Zähler 130 auf Null gestellt würde, wodurch die eingestellte Verzögerungszeit verloren ginge.

Ferner geht das Überlaufsignal auf der Leitung 123 über das ODER-Glied 124 auf den Impulsformer 126, der wieder einen kurzen Impuls an den Eingang CMP des Zählers 130 abgibt und damit dessen Zählerstellung invertiert, wie bereits vorher bei der Entsicherungsphase beschrieben wurde. Außerdem wird das Flip-Flop 116 über das ODER-Glied 114 wieder umgeschaltet, so daß das UND-Glied 118 freigegeben wird und der Zähler 130 wieder Impulse des Taktimpulsgenerators IG erhält und von der durch die Invertierung erzeugten negativen Stellung gegen Null zählt.

Sobald der Zähler 130 die Nullstellung erreicht, ist die vorher programmierte Verzögerungzeit tv nach dem letzten vom Zähler 106 gezählten Programmierimpuls verstrichen, so daß die Zündung ausgelöst werden muß. Dies geschieht dadurch, daß der Zähler 130 bei Erreichen seiner Nullstellung von negativen Werten aus ein Signal erzeugt und dem UND-Glied 170 zuführt, das über das Überlaufsignal auf der Leitung 123 freigegeben ist, so daß das Ausgangssignal des UND-Gliedes 170 den Zündschalter SZ schließen kann, wodurch sich die im Kondensator 172 gespeicherte Ladung über das Zündelement ZE entlädt und dieses zur Zündung bringt.

Mit dem letzten Programmierimpuls, mit dem der Zähler 106 seine Endstellung erreicht, wird das Zuführen von Signalen über die Leitungen 101 und 103 unterbrochen, sei es, daß die Zündmaschine die Energiezufuhr abschaltet, sei es, daß der Zünder mit der kürzesten Verzögerungszeit durch Auslösung die Verbindung mit der Zündmaschine unterbricht. Der Kondensator 172 erhält daher für die Dauer der Verzögerungszeit keine Energie mehr, und die darin anliegende Spannung fällt durch den Energieverbrauch der dargestellten Anordnung langsam ab. Da für die Zündung des Zündelementes ZE eine Mindestspannung am Kondensator 172 notwendig ist, überwacht die Einheit 168 diese Spannung, und wenn diese unter eine vorgegebene Grenze fällt, bei der eine sichere Auslösung des Zündelementes nicht mehr gewährleistet ist, wird der Zündschalter SZ ebenfalls betätigt und die Zündung ausgelöst, obwohl die vorgegebene Verzögerungszeit möglicherweise noch nicht abgelaufen ist. Wenn dies nicht vorgenommen würde, könnte es geschehen, daß die Betriebsspannung UB für den Betrieb der elektronischen Anordnung noch ausreicht und das UND-Glied 170 schließlich über sein Ausgangssignal den Zündschalter SZ schließt, daß jedoch in diesem Augenblick die im Kondensator 172 gespeicherte Energie nicht mehr ausreicht, das Zündelement auszulösen, so daß nach einer Sprengung eine noch nicht gezündete Ladung in dem Haufwerk verbleiben würde, was unter allen Umständen vermieden werden muß. Dieser zuletzt geschilderte Fall kann jedoch nur bei einem Fehler auftreten, insbesondere bei einer zu kleinen Kapazität des Kondensators 172 infolge unzulässig großer Toleranzen.

Durch die beschriebene Anordnung mit dem der Programmierung der Verzögerungszeit vorgeschalteten Entsicherungsphase wird erreicht, daß die Einstellung der Verzögerungszeit und Auslösung der Zündung nur durch die dafür vorgesehenen Impulse von der Zündmaschine erfolgt, so daß eine größtmögliche Sicherheit gewährleistet ist.

Die in Fig. 7 beschriebene Schaltungsanordnung läßt sich auch allgemein zweckmäßig verwenden, wenn also beispielsweise durch Signale, die von einem Sender über eine möglicherweise gestörte Strecke zu einem Empfänger übertragen werden, eine Anordnung in dem Empfänger ausgelöst werden soll, die durch Störsignale keinesfalls ausgelöst werden darf. Dabei wird dann das Auslösesignal unmittelbar nach der bzw. der letzten Entsicherungsphase übertragen und nur bei umgeschaltetem Flip-Flop 164 ausgewertet.

**Patentansprüche**

1. Verfahren zum zeitlich gestaffelten Auslösen elektronischer Sprengzeitzünder mit individuellen Verzögerungszeiten ($\Delta T$) gegenüber einem Befehlssignal von einer Zündmaschine, die mit den Sprengzeitzündern in einer Reihen- und/oder Parallelschaltung zu wenigstens einem Zündkreis verbunden ist, bei welchem in einer durch eine Impulsfolge für die Zündung von der Zündmaschine bestimmten Aufladephase zur Einstellung der individuellen Verzögerungszeit ($\Delta T$) in jedem dieser Zünder ein erster Signalfluß ($F_{\Delta T}$) von einer Quelle einem Integrator zugeführt und während einer anschließenden Verzögerungsphase, in allen Zündern mit dem Befehlssignal gleichzeitig beginnend, ein zu dem ersten Signalfluß ($F_{\Delta T}$) in vorgegebener Beziehung stehender zweiter Signalfluß ($F_T$) so lange dem Integrator zugeführt wird, bis das Integral des zweiten Signalflusses betragsmäßig gleich dem in dem Integrator gespeicherten Integral des ersten Signalflusses geworden ist, woraufhin die Zündung ausgelöst wird, *dadurch gekennzeichnet*, daß das Zuführen der ersten Signalflüsse zu den Integratoren aller Zünder gleichzeitig beginnt und für jeden Zünder die individuelle Verzögerungszeit ($\Delta T$) nur durch das von der Impulsfolge für die Zündung abhängige Ende des Zuführens der ersten Signalflüsse und durch das Verhältnis beider Signalflüsse zueinander bestimmt wird.

2. Verfahren nach Anspruch 1, *dadurch gekennzeichnet*, daß die Impulsfolge für die Zündung durch eine Folge von n Impulsen gebildet und in jedem Zünder die individuelle Verzögerungszeit ($\Delta T$) durch Abzählen einer entsprechenden Anzahl m dieser Impulse gebildet wird.

3. Verfahren nach Anspruch 2, *dadurch gekennzeichnet*, daß die Impulsfolge für die Zündung durch eine einstellbare unregelmäßige Impulsfolge gebildet wird.

4. Verfahren nach Anspruch 2, *dadurch gekennzeichnet*, daß die Impulsfolge für die Zündung durch eine regelmäßige Impulsfolge gebildet wird.

det wird.

5. Verfahren nach einem der Ansprüche 1 bis 4, *dadurch gekennzeichnet*, daß die Signalflüsse Impulsfrequenzen sind und die Impulsfrequenz des ersten Signalflusses ($F_{\Delta T}$) und des zweiten Signalflusses ($F_T$) in einem festen Teilerverhältnis zueinander stehen, das kleiner als 1 ist und die individuelle Verzögerungszeit bestimmt.

6. Verfahren nach einem der Ansprüche 1 bis 4, *dadurch gekennzeichnet*, daß als Signalflüsse Konstantströme verwendet werden.

7. Verfahren nach einem der Ansprüche 2 bis 4, *dadurch gekennzeichnet*, daß der erste Signalfluß gleich dem zweiten Signalfluß ist und daß das Zuführen der ersten Signalflüsse zu den Integratoren aller Zünder über eine durch die Impulsfolge für die Zündung zünderindividuell bestimmte Zeit aufrechterhalten wird.

8. Verfahren nach Anspruch 1 oder einem der folgenden, dadurch gekennzeichnet, daß vor der Impulsfolge für die Zündung eine erste Folge von Freigabeimpulsen übertragen wird, während deren Dauer ein Signalfluß integriert wird, anschließend eine zweite, von der ersten Folge abweichende, jedoch die gleiche Dauer aufweisende Folge von Freigabeimpulsen übertragen und während dieser Dauer ebenfalls dieser Signalfluß integriert wird, und daß dann und nur dann die von der Zündmaschine empfangenen Signale als Impulsfolge für die Zündung gewertet werden, wenn die Abweichung des am Ende der ersten Folge gebildeten Integrals von dem am Ende der zweiten Folge gebildeten Integrals unter einem vorgegebenen Grenzwert liegt.

9. Verfahren nach Anspruch 8, *dadurch gekennzeichnet*, daß die erste Folge der Freigabeimpulse eine vorgegebene erste konstante Frequenz und die zweite Folge eine vorgegebene zweite konstante Frequenz hat.

10. Verfahren nach Anspruch 8 oder 9, *dadurch gekennzeichnet*, daß die Aufeinanderfolge der ersten und zweiten Folge von Freigabeimpulsen mindestens einmal wiederholt wird und die Wertung der von der Zündmaschine empfangenen Signale als Impulsfolge für die Zündung nur dann erfolgt, wenn am Ende mindestens einer zweiten Folge von Freigabeimpulsen die Abweichung der beiden Integrale unter der vorgegebenen Grenze liegt, und daß bei einer größeren Abweichung die Integrale auf einen Anfangswert zurückgesetzt werden.

11. Verfahren nach einem der Ansprüche 8 bis 10, *dadurch gekennzeichnet*, daß die kürzeste Dauer mindestens der ersten von der Zündmaschine gelieferten Impulsfolge für die Zündung um einen vorgegebenen Faktor größer gewählt wird als die längste Dauer der Freigabeimpulsfolge und daß von dem ersten nach Ende der zweiten Folge oder einer vorgegebenen Anzahl von zweiten Folgen empfangenen Impulse an, an dessen oder deren Ende das Integral des Signalflusses eine vorgegebene zweite Grenze überschritten hat, die von der Zündmaschine empfangenen Signale als Impulsfolge für die Zündung gewertet werden.

12. Verfahren nach Anspruch 10 oder 11, dadurch gekennzeichnet, daß das am Ende der ersten Folge der Freigabeimpulse erreichte Integral mit vorgegebenen Grenzwerten verglichen wird und bei Überschreitung dieser Grenzwerte das Integral auf den Anfangswert zurückgesetzt wird.

13. Verfahren nach Anspruch 8 oder einem der folgenden, dadurch gekennzeichnet, daß die Energiezufuhr zum Energiespeicher des Sprengzeitzünders auf einen Wert zwischen dem zum Speisen der elektronischen Elemente und dem zum Zünden des Zündelements begrenzt wird, bis am Ende der bzw. einer vorgegebenen Anzahl zweiter Folgen von Freigabeimpulsen die Abweichung der beiden Integrale unter der vorgegebenen Grenze liegt und dem Energiespeicher die maximale Energie zugeführt wird.

14. Elektronischer Sprengzeitzünder zum Anschluß an eine mindestens eine Impulsfolge für die Zündung (T) liefernde Zündmaschine (ZM), mit einer Signalquelle (IG, FT, KSQ1, KSQ2), welche in einer durch die Impulsfolge für die Zündung bestimmten Aufladephase einen ersten Signalfluß zum Aufladen eines Integrators (Z, CT) liefert, und mit einer Steuereinrichtung ($S_1$, $S_2$), die nach Ablauf der Aufladephase eine Verzögerungsphase einleitet, in der die Signalquelle einen zweiten Signalfluß zum Integrator liefert, wobei ein Zündsignal erzeugt wird, wenn der Inhalt des Integrators den gespeicherten Integrationswert der Aufladephase erreicht, insbesondere zur Durchführung des Verfahrens nach den Ansprüchen 1 bis 13, dadurch gekennzeichnet, daß die Steuereinrichtung ($S_1$, $S_2$) eines jeden Zünders den ersten Signalfluß bei dem ersten Impuls der Impulsfolge für die Zündung einleitet und bis zu einem zünderspezifisch eingestellten m-ten Impuls aufrechterhält und den zweiten Signalfluß bei dem n-ten Impuls der Impulsfolge für die Zündung beginnt, wobei $m \leqslant n$ ist und der erste und der zweite Signalfluß ein zünderspezifisch vorbestimmtes Verhältnis zueinander haben.

15. Elektronischer Sprengzeitzünder nach Anspruch 14, dadurch gekennzeichnet, daß die Werte m und n stets gleich und die Signalflüsse zünderspezifisch unterschiedlich sind.

16. Elektronischer Sprengzeitzünder nach Anspruch 15, dadurch gekennzeichnet, daß die Signalquelle (IG, FT) einen Impulsgenerator (IG) enthält, dem ein Frequenzteiler (FT) nachgeschaltet ist und daß der erste Signalfluß über den Frequenzteiler (FT) und der zweite Signalfluß direkt von dem Impulsgenerator (IG) zu dem als Zähler ausgebildeten Integrator (Z) läuft.

17. Elektronischer Sprengzeitzünder nach Anspruch 14, dadurch gekennzeichnet, daß die Signalquelle zwei Konstantstromquellen (KSQ1, KSQ2) mit unterschiedlichen Stromwerten enthält und daß der Integrator einen Ladekondensator (CT) enthält.

18. Elektronischer Sprengzeitzünder nach Anspruch 14, dadurch gekennzeichnet, daß der erste und zweite Signalfluß stets gleich sind und der Wert für m zünderspezifisch unterschiedlich ist.

19. Elektronischer Sprengzeitzünder nach Anspruch 14 oder einem der folgenden, dadurch gekennzeichnet, daß die Steuereinrichtung ($S_1$, $S_2$) einen mit einem Speicherelement (164) verbundenen Zähler (106) enthält und daß ein Ausgang für eine vorgegebene Zählerstellung (NE) des Zählers (106) entsprechend der Summe der Anzahl der in einer ersten und einer darauffolgenden zweiten Folge von der Zündmaschine übertragenen Freigabeimpulse mit einem Umschalteingang des Speicherelements (164) verbunden ist und dieses umschaltet, wenn ein am Ende der ersten Folge von Freigabeimpulsen im Integrator (Z, CT, 130) gebildetes Integral von einem am Ende der zweiten Folge von Freigabeimpulsen gebildeten Integrals um weniger als einen vorgegebenen Wert abweicht, und daß das Speicherelement (164) nur im umgeschalteten Zustand die Auslösung der Zündung freigibt.

20. Elektronischer Sprengzeitzünder nach Anspruch 19, dadurch gekennzeichnet, daß eine Überwachungsschaltung (132, 134, 136, 138, 140) vorgesehen ist, die den Integrator (Z, CT, 130) und den Zähler (106) auf deren Anfangsstellung zurücksetzt, wenn das Integral am Ende der ersten Folge von Freigabeimpulsen außerhalb vorgegebener erster Grenzen (ZEU, ZEO) liegt.

21. Elektronischer Sprengzeitzünder nach Anspruch 20, dadurch gekennzeichnet, daß die Überwachungsschaltung (132, 134, 136, 138, 140) den Integrator (Z, CT, 130) und den Zähler (106) außerdem auf die Anfangsstellung zurücksetzt, wenn nach dem Umschalten des Speicherelements das Integral am Ende eines empfangenen Impulses außerhalb vorgegebener zweiter Grenzen (ZPO, ZPU) liegt.

22. Elektronischer Sprengzeitzünder nach Anspruch 19 oder einem der folgenden, bei dem ein von außen gespeister Energiespeicher für den Betrieb der elektronischen Elemente und des Zündelements vorhanden ist, dadurch gekennzeichnet, daß erst das umgeschaltete Speicherelement (164) die Aufladung des Energiespeichers (172) auf einen für die Zündung des Zündelements (ZE) ausreichenden Wert freigibt.

## Claims

1. Process for the chronologically staggered release of electronic explosive delay detonators with individual delay times ($\Delta T$) with respect to a command signal from a blasting detonating machine, which is connected in a series and/or parallel circuit to at least one detonation circuit by means of the explosive delay detonators, in which, in a charging phase for the adjustment of the individual delay time ($\Delta T$) in each of these detonators determined by a sequence of impulses for the detonation of the blasting detonating machine, a first signal current ($F_{\Delta T}$) from

one source is supplied to an integrator and, during a subsequent delay phase, beginning in all detonators simultaneously with the command signal, a second signal current ($F_T$) standing to the first signal current ($F_{\Delta T}$) in predetermined dependence is supplied to the integrator sufficiently long until the integral of the first second current has become quantitively equal to the integral of the first signal current stored in the integrator, whereupon the detonation is released, characterised in that the supply of the first signal currents to the integrators of all detonators begins simultaneously and for each detonator the individual delay time ($\Delta T$) is only determined through the end of the supply of the first signal current which depends on the sequence of impulses for the detonation and by the ratio of the two signal currents to one another.

2. Process according to claim 1, characterised in that the sequence of impulses for the detonation is formed by a series of n impulses and, in each detonator the individual delay time ($\Delta T$) is formed by counting off of a corresponding number m of these impulses.

3. Process according to claim 2, characterised in that the sequence of impulses for the detonation is formed by an adjustable irregular sequence of impulses.

4. Process according to claim 2, characterised in that the sequence of impulses for the detonation is formed by a regular sequence of impulses.

5. Process according to one of claims 1 to 4, characterised in that the signal currents are impulse frequencies and the impulse frequency of the first signal current ($F_{\Delta T}$) and of the second signal current ($F_T$) stand to one another in a fixed ratio which is less than 1 and determines the individual delay time.

6. Process according to one of claims 1 to 4, characterised in that stabilized currents are used as signal currents.

7. Process according to one of claims 2 to 4, characterised in that the first signal current is equal to the second signal current and that the supply of the first signal current to the integrators of all detonators is maintained over a time determined by the sequence of impulses for the detonation.

8. Process according to claim 1 or one of the following claims, characterised in that, before the impulse sequence for the detonation, a first sequence of release impulses is transmitted during whose duration a signal current is integrated, then a second sequence of release impulses differing from the first sequence, although having the same duration is transmitted and during this period this signal current is likewise integrated, and that then and only then, the signals received by the blasting detonating machine are evaluated as an impulse sequence for the detonation if the difference of the integral formed at the end of the first sequence from the integral formed at the end of the second sequence lies below a predetermined limiting value.

9. Process according to claim 8, characterised in that the first sequence of release impulses has a predetermined first constant frequency and the second sequence has a predetermined second constant frequency.

10. Process according to claim 8 or 9, characterised in that the succession one after the other of the first and second sequences of release impulses is repeated at least once and the evaluation of signals received by the blasting detonation machine as a sequence of impulses for the detonation only then takes place if at the end of at least a second sequence of release impulses, the difference of the two integrals lies below the predetermined limit, and that, with a greater difference, the integrals are reset to a starting value.

11. Process according to one of claims 8 to 10, characterised in that the shortest duration at least of the first sequence of impulses for the detonation which is supplied by the blasting detonating machine is chosen as approximately a predetermined factor which is greater than the longest period of release impulses and that the signals received from the blasting detonating machine are evaluated as a sequence of impulses for the detonation from the first impulse which is received after the end of the second sequence or the predetermined number of second sequences, at the end of which the integral of the signal current has exceeded a predetermined second limit.

12. Process according to claim 10 or 11, characterised in that the integral obtained at the end of the first sequence of release impulses is compared with predetermined limiting values and on exceeding this limiting value the integral is set back to the starting value.

13. Process according to claim 8 or one of the following claims, characterised in that the supply of energy to the energy storer of the explosive delay detonator is limited to a value between that for energising the electronic elements and that for detonation of the detonating element, until at the end of the, or of a predetermined number of second sequences of release impulses, the difference of the two integrals lies below the predetermined limit and the maximum energy is supplied to the energy storer.

14. Electronic explosive delay detonator for the connection to a blasting detonating machine (ZM) supplying at least one sequence of impulses for the detonation (T), with a signal source (IG, FT; KSQ1, KSQ2), which supplies, in a charging phase determined by the impulse sequence, a first signal current for the charging of an integrator (Z, ZT), and with a control arrangement ($S_1$, $S_2$) which, after elapse of the charging phase, enters a delay phase in which the signal source supplies a second signal current to the integrator, with a detonation signal being produced if the content of the integrator reaches the stored integration value of the charging phase, in particular for carrying out the process according to Claims 1 to 13, characterised in that the control arrangement ($S_1$, $S_2$) of each detonator initiates the first signal current with the first impulse of the sequence of impulses for the detonation and maintains until the mth impulse which is set specifically for a detonation and begins the second sequence of impulses at the nth impulse of the sequence of impulses for the detonation with m being $\geqslant$ n and the first and the second signal current having a predetermined ratio to one another which is specific to the detonation.

15. Electronic explosive delay detonator according to Claim 14, characterised in that the values m and n are always the same and the signal currents are different and specific to the detonation.

16. Electronic explosive delay detonator according to claim 15, characterised in that the signal source (IG, FT) contains an impulse generator (IG) to which a frequency divider (FT) is connected and that the first signal current runs through the frequency divider (FT) and the second signal current runs directly from the impulse generator (IG) to the integrator (Z) formed as a counter.

17. Electronic explosive delay detonator according to claim 14, characterised in that the signal source contains two stabilised current sources (KSQ1, KSQ2) with different current values and that the integrator contains a charge condenser (CT).

18. Electronic explosive delay detonator according to claim 14, characterised in that the first and the second signal currents are always the same and the value for m is different and specific to the detonation.

19. Electronic explosive delay detonator according to claim 14 or one of the following claims, characterised in that the control arrangement ($S_1$, $S_2$) contains a counter (106) connected with a storage element (164) and that an output for a predetermined numerical setting (NE) of the counter (106) corresponding to the sum of the number of release impulses transmitted from the blasting detonating machine in a first and a second sequence following thereon is continued with a switching over of the storage element (164) and switches this over if an integral formed at the end of the first sequence if release impulses in the integrator (Z, ZT) differs from an integral formed at the end of the second sequence of release impulses by approximately less than a predetermined value, and that the storage element (164) only releases the release of the detonation in the switched over setting.

20. Electronic explosive delay detonator according to claim 19, characterised in that a monitoring circuit (132, 134, 136, 138, 140) is provided which resets the integrator (Z, CT, 130) and the counter (106) to its starting setting if the integral at the end of the first time sequence of release impulses lies outside predetermined first limits (ZEU, ZEO).

21. Electronic explosive delay detonator according to claim 20, characterised in that the monitoring circuit (132, 134, 136, 138, 140) resets the integrator (Z, CT, 130) and the counter (106), to the starting setting, if, in addition, after the switching over of the storage element, the integral at the end of an impulse from the blasting detonating machine lies outside predetermined second limits (ZPO, ZPU).

22. Electronic explosive delay detonator according to claim 19 or one of the following claims, in which an energy storer for the operation of the electronic elements and the detonating element, supplied from externally, is provided, characterised in that only the switched over storage element (164) releases the charging of the energy storer (172) at a value sufficing for the detonation of the detonation element (ZE).

## Revendications

1. Procédé pour l'allumage échelonné dans le temps de détonateurs électroniques à temps de temporisation ($\Delta$T) individuels par rapport à un signal de commande venant d'un appareil central de mise à feu qui est relié aux détonateurs en un branchement en série et/ou en parallèle pour constituer au moins un circuit d'allumage, suivant lequel, dans une phase de charge déterminée par une séquence d'impulsions pour l'allumage par l'appareil de mise à feu, un premier flux de signaux ($F_{\Delta T}$) pour régler le temps de temporisation individuel ($\Delta$T) dans chacun de ces détonateurs est amené d'une source à un intégrateur et, pendant une phase de temporisation consécutive qui commence dans tous les détonateurs simultanément avec le signal de commande, un deuxième flux de signaux ($F_T$) se trouvant dans un rapport prédéterminé avec le premier flux de signaux ($F_{\Delta T}$) est amené à l'intégrateur jusqu'à ce que l'intégrale du deuxième flux de signaux soit devenue égale à l'intégrale du premier flux de signaux accumulée dans l'intégrateur, l'allumage étant ensuite déclenché, caractérisé par le fait que l'amenée des premiers flux de signaux aux intégrateurs de tous les détonateurs commence simultanément et que, pour chaque détonateur, le temps de temporisation individuel ($\Delta$T) n'est déterminé que par la fin de l'amenée des premiers flux de signaux, fin qui dépend de la séquence d'impulsions pour l'allumage, et par le rapport mutuel entre les deux flux de signaux.

2. Procédé selon la revendication 1, caractérisé par le fait que la séquence d'impulsions destinée à l'allumage est constituée par une séquence de n impulsions et que dans chaque détonateur le temps individuel de temporisation ($\Delta$T) est formé par le comptage d'un nombre correspondant m de ces impulsions.

3. Procédé selon la revendication 2, caractérisé par le fait que la séquence d'impulsions pour l'allumage est constituée par une séquence réglable et irrégulière d'impulsions.

4. Procédé selon la revendication 2, caractérisé par le fait que la séquence d'impulsions pour l'allumage est constituée par une séquence régulière d'impulsions.

5. Procédé selon l'une des revendications 1 à 4, caractérisé par le fait que les flux de signaux sont des fréquences d'impulsions et que la fréquence d'impulsions du premier flux ($F_{\Delta T}$) et celle du deuxième flux de signaux ($F_T$) sont situées dans un rapport de division fixe, qui est inférieur à 1 et qui détermine le temps individuel de temporisation.

6. Procédé selon l'une des revendications 1 à 4, caractérisé par le fait que l'on utilise des courants constants comme flux de signaux.

7. Procédé selon l'une des revendications 2 à 4, caractérisé par le fait que le premier flux de signaux est égal au deuxième flux de signaux et que l'amenée des premiers flux de signaux aux intégrateurs de tous les détonateurs est maintenue pendant un temps déterminé individuellement pour chaque détonateur par la séquence d'impulsions pour l'allumage.

8. Procédé selon la revendication 1 ou l'une des revendications suivantes, caractérisé par le fait qu'avant la séquence d'impulsions pour l'allumage est transmise une première séquence d'impulsions d'autorisation de mise à feu pendant la durée de laquelle un flux de signaux est intégré, qu'ensuite est transmise une deuxième séquence, d'impulsions d'autorisation de mise à feu, différente de la première mais présentant la même durée, et que pendant cette durée ce flux de signaux est aussi intégré et par le fait qu'ensuite et seulement alors les signaux reçus de l'appareil central de mise à feu sont évalués comme étant une séquence d'impulsions pour l'allumage dans le cas où l'écart entre l'intégrale formée à la fin de la première séquence et l'intégrale formée à la fin de la deuxième séquence se situe en dessous d'une valeur limite prédéterminée.

9. Procédé selon la revendication 8, caractérisé par le fait que la première séquence des impulsions d'autorisation de mise à feu présente une première fréquence constante prédéterminée et que la deuxième séquence présente une deuxième fréquence constante prédéterminée.

10. Procédé selon la revendication 8 ou 9, caractérisé par le fait que l'enchaînement de la première et de la deuxième séquences d'impulsions d'autorisation de mise à feu est répétée au moins une fois et que l'évaluation des signaux reçus de l'appareil central de mise à feu comme étant une séquence d'impulsions pour l'allumage n'a lieu que dans le cas où à la fin d'au moins une deuxième séquence d'impulsions d'autorisation de mise à feu l'écart entre les deux intégrales se situe en dessous de la limite prédéterminée et par le fait qu'en cas d'un écart supérieur l'intégrale est ramenée à une valeur initiale.

11. Procédé selon l'une des revendications 8 à 10, caractérisé par le fait que la durée la plus courte, au moins de la première séquence d'impulsions pour l'allumage fournie par l'appareil central de mise à feu est choisie supérieure d'un facteur prédéterminé à la durée la plus longue de la séquence d'impulsions d'autorisation de mise à feu et qu'à partir de la première impulsion reçue après la fin de la deuxième séquence ou d'un nombre prédéterminé de deuxièmes séquences, à la fin de laquelle ou desquelles l'intégrale du flux de signaux a dépassé une deuxième limite prédéterminée, les signaux reçus de l'appareil central de mise à feu sont évalués comme étant une séquence d'impulsions pour l'allumage.

12. Procédé selon la revendication 10 ou 11, caractérisé par le fait que l'intégrale obtenue à la fin de la première séquence d'impulsions d'autorisation de mise à feu est comparée à des valeurs limites prédéterminées et que, en cas de dépassement de ces valeurs limites, cette intégrale est ramenée à la valeur initiale.

13. Procédé selon la revendication 8 ou l'une des revendications suivantes, caractérisé par le fait que l'apport d'énergie à l'accumulateur d'énergie du détonateur à temporisation est limité à une valeur située entre celle nécessaire pour alimenter les éléments électroniques et celle nécessaire à allumer l'élément d'amorçage, jusqu'à ce qu'à la fin du ou d'un nombre prédéterminé de deuxièmes séquences d'impulsions d'autorisation, l'écart entre les deux intégrales se situe en dessous de la limite prédéterminée et que l'accumulateur d'énergie reçoit l'apport énergétique maximal.

14. Détonateur à temporisation électronique pour connexion à un appareil central de mise à feu (ZM) délivrant au moins une séquence d'impulsion pour l'allumage (T), comportant une source de signaux (IG, FT, KSQ1, KSQ2) qui fournit, dans une phase de charge déterminée par la séquence d'impulsion de l'allumage, un premier flux de signaux pour charger un intégrateur (Z, CT), et comportant un dispositif de commande ($S_1$, $S_2$) qui, après l'écoulement de la phase de charge, induit une phase de temporisation pendant laquelle la source de signaux délivre un deuxième flux de signaux à l'intégrateur en générant un signal d'allumage si le contenu de l'intégrateur atteint la valeur d'intégration accumulée pendant la phase de charge, en particulier pour la réalisation du procédé conforme aux revendications 1 à 13, caractérisé par le fait que le dispositif de commande ($S_1$, $S_2$) de chaque détonateur induit le premier flux de signaux lors de la première impulsion de la séquence d'allumage et maintient ce flux jusqu'à une impulsion m réglée spécifiquement par rapport au détonateur et induit le deuxième flux de signaux lors de l'impulsion n de la séquence d'impulsion d'allumage, m étant égale ou inférieure à n et le rapport entre le premier et le deuxième flux de signaux étant prédéterminé spécifiquement en fonction du détonateur.

15. Détonateur à temporisation électronique selon la revendication 14, caractérisé par le fait que les valeurs de m et de n sont toujours égales et que les flux de signaux sont différents en fonction de l'allumeur.

16. Détonateur à temporisation électronique selon la revendication 15, caractérisé par le fait que la source de signaux (IG, FT) contient un générateur d'impulsion (IG) en aval duquel est branché un diviseur de fréquences (FT) et par le fait que le premier flux de signaux passe par le diviseur de fréquences (FT) et que le deuxième flux de signaux passe directement du générateur d'impulsions (IG) à l'intégrateur (Z) réalisé en compteur.

17. Détonateur à temporisation électronique selon la revendication 14, caractérisé par le fait que la source de signaux contient deux sources de courant constant (KSQ1, KSQ2) à intensités différentes et que l'intégrateur contient un condensateur de charge (CT).

18. Détonateur à temporisation électronique selon la revendication 14, caractérisé par le fait que le premier et le deuxième flux de signaux sont toujours égaux et que la valeur de m est diversifiée selon la spécificité de chaque détonateur.

19. Détonateur à temporisation électronique selon la revendication 14 ou l'une des revendications suivantes, caractérisé par le fait que le dispositif de commande ($S_1$, $S_2$) contient un compteur (106) relié à un élément de mémorisation (164) et qu'une sortie pour une position (NE) prédéterminée du compteur (106) est reliée à une entrée de commutation de l'élément de mémorisation (164) en fonction de la somme du nombre d'impulsions d'autorisation de mise à feu transmises de l'appareil central de mise à feu dans une première séquence et une deuxième séquence immédiatement consécutive et que cette sortie commute ledit élément (164) lorsqu'une intégrale formée dans l'intégrateur (Z, CT, 130) à la fin de la première séquence d'impulsions d'autorisation de mise à feu diffère d'une valeur inférieure à une valeur prédéterminée d'une intégrale formée à la fin de la deuxième séquence d'impulsions d'autorisation de mise à feu, et par le fait que l'élément de mémorisation (164) n'autorise le déclenchement de l'allumage qu'en situation commutée.

20. Détonateur à temporisation électronique selon la revendication 19, caractérisé par le fait qu'un circuit de contrôle (132, 134, 136, 138, 140) est prévu, qui ramène l'intégrateur (Z, CT, 130) et le compteur (106) à leur position initiale lorsque l'intégrale à la fin de la première séquence d'impulsions d'autorisation de mise à feu se situe à l'extérieur de premières limites prédéterminées (ZEU, ZEO).

21. Détonateur à temporisation électronique selon la revendication 20, caractérisé par le fait que le circuit de contrôle (132, 134, 136, 138, 140) ramène l'intégrateur (Z, CT, 130) et le compteur (106) à leur position initiale également lorsque, après la commutation de l'élément de mémorisation, l'intégrale se situe à la fin d'une impulsion reçue, à l'extérieur de deuxièmes limites prédéterminées (ZPO, ZPU).

22. Détonateur à temporisation électronique selon la revendication 19 ou l'une des revendications suivantes, comprenant un accumulateur d'énergie alimenté de l'extérieur pour faire fonctionner les éléments électronique et l'élément d'amorçage, caractérisé par le fait que seul l'élément de mémorisation (164) commuté autorise la charge de l'accumulateur d'énergie (172) jusqu'à une valeur suffisante pour l'allumage de l'élément d'amorçage (ZE).

Fig. 1

EP 0 147 688 B1

Fig. 2

Fig. 3

EP 0 147 688 B1

Fig.4

Fig.5

Fig.6

FIG.7

FIG.8